# DEMANDE DE BREVET EUROPEEN

(11) **EP 3 663 626 A1**
(43) Date de publication de la demande: **10.06.2020**
(21) Numéro de dépôt: 19214257.8
(22) Date de dépôt: 06.12.2019
(51) Int. Cl.: F16L 59/02, D04H 1/44, D04H 1/72, B23D 57/00

(54) **DISPOSITIF DE RÉGLAGE POUR MACHINE DE FABRICATION DE MATELAS EN FIBRES MINÉRALES**

(30) Priorité: 06.12.2018 FR 1872461
(71) Demandeur: Alfi Technologies, 49110 Beaupreau-en-Mauges (FR)
(72) Inventeur: JAUBERT, Yann, 78000 Versailles (FR); SCHOEN, Nicolas, 49610 Juigné-sur-Loire (FR)
(74) Mandataire: Ipsilon

(57) **Abrégé**

L'invention concerne une machine de fabrication de matelas en fibres minérales caractérisée en ce qu'elle comprend :
- un dispositif de convoyage,
- deux parois latérales écartées l'une de l'autre, situées respectivement le long des deux bords latéraux opposés du dispositif et qui définissent, avec une surface supérieure dudit dispositif, un espace dans lequel des fibres minérales sont introduites pour se déposer sur ladite surface supérieure, chaque paroi latérale s'étendant verticalement, au moins une des deux parois latérales comprenant, à une extrémité inférieure, une partie mobile (60) qui est apte à se déplacer verticalement et de manière étanche relativement à ladite paroi latérale et qui est disposée au moins en partie au-dessus d'une portion de la surface supérieure du dispositif de convoyage en regard, à une distance verticale « d » de ladite portion, et
- au moins un dispositif de réglage (40) de la distance verticale « d ».

## Description

L'invention concerne une machine de fabrication de matelas en fibres minérales comprenant un dispositif de réglage accessible depuis l'extérieur des parois de la machine.

Il existe différents types de machine permettant de fabriquer des matelas en fibres minérales comme par exemple des matelas en laine de verre. Ces machines comprennent un dispositif permettant de générer des fibres minérales et un support sur lequel est formé le matelas en fibres minérales.

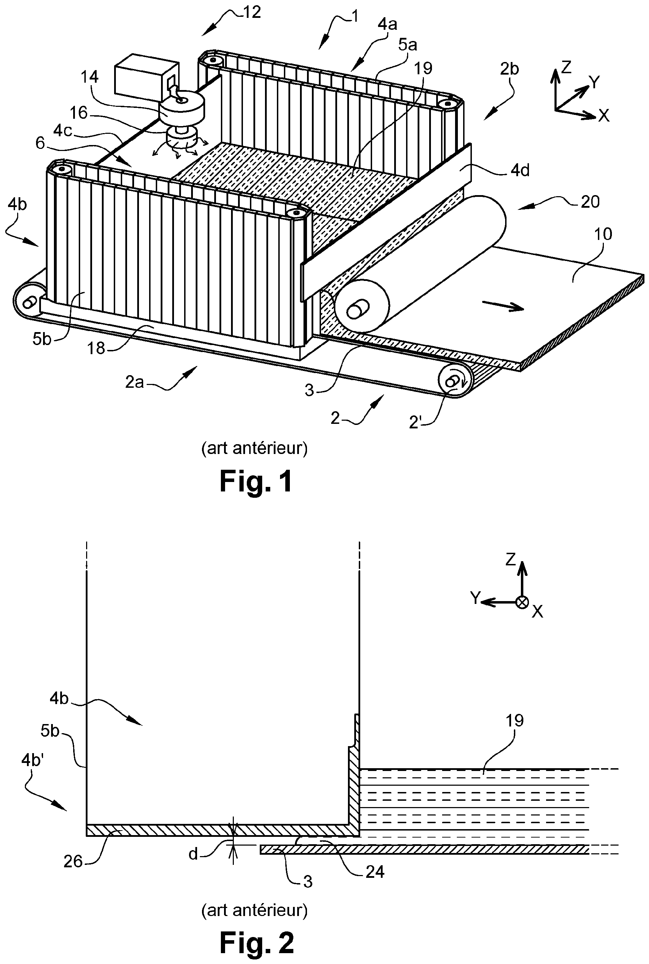

La figure 1 illustre un exemple d'une machine 1 de l'art antérieur pour la fabrication d'un matelas en laine de verre. La machine 1 comprend un dispositif de convoyage 2 comprenant un convoyeur 2' déplaçant un support poreux 3, formé par exemple de lattes métalliques, dans une direction X. La machine 1 comprend également deux parois latérales 4a et 4b situées respectivement le long de deux bords latéraux opposés 2a et 2b du dispositif, et une paroi arrière 4c. Les parois latérales 4a et 4b comprennent chacune une cloison verticale 5a et 5b formant une courroie, la partie intérieure de ces cloisons verticales 5a et 5b étant apte à se déplacer dans la direction X. Les parois latérales 4a et 4b sont posées sur le sol grâce à des pieds non représentés. L'ensemble du convoyeur 2 et des parois 4a-c définissent un espace 6 pouvant accueillir les fibres de verre destinées à former un matelas 10.

Un dispositif 12 placé au-dessus de l'espace 6, permet de générer des fibres de verre à partir de verre fondu qui est versé dans un mélangeur 14 puis dans une tête rotative 16, cette dernière étant munie d'orifices sur son pourtour. Un dispositif d'aspiration 18 placé dans le convoyeur 2 crée une dépression qui permet la formation de fibres de verre à la sortie des orifices de la tête rotative 16. Les fibres de verre ainsi formées sont alors entrainées vers le dispositif d'aspiration 18 et se déposent sur le support 3. Les fibres de verre déposées 19, formant un tapis de laine de verre, sont entrainées par le déplacement du support 3 et des cloisons verticales 5a et 5b dans la direction X. Les fibres déposées 19 (ou tapis de laine de verre) passent alors sous une paroi avant 4d du convoyeur 2, puis sous un rouleau compresseur 20 qui permet de former le matelas 10.

La figure 2 est une vue en coupe transversale d'une partie de la machine 1 sur laquelle est représentée la paroi latérale 4b comprenant, à une extrémité inférieure 4b', une partie mobile 26. La hauteur de la partie mobile 26 est modulable grâce à un dispositif de réglage non représenté. La partie mobile 26 est disposée au moins en partie au-dessus d'une portion de la surface supérieure du support 3 en regard, la surface supérieure du support 3 étant la surface supérieure du dispositif de convoyage 2. Lorsque la machine est en fonctionnement, le support 3 et la cloison 5b se déplacent dans la direction X. Le support 3 et la partie mobile 26 sont espacés d'une distance verticale « d » dont la valeur peut varier en fonction du réglage de la hauteur de la partie mobile 26.

Le réglage de la distance « d » est important pour le bon fonctionnement de la machine. En effet, si la distance « d » est trop faible, le support 3 et la partie mobile 26 peuvent entrer en contact. Ceci empêcherait un bon déplacement du support 3 et entraînerait une usure des matériaux du support 3 et de la partie mobile 26. Au contraire, si la distance « d » est trop grande, une partie des fibres de verre déposées 19 sur le support 3 peut passer entre le support 3 et la partie mobile 26 formant ainsi une excroissance, notamment au niveau de la zone de la partie mobile 26 qui est au-dessus du support 3. De telles excroissances ne sont pas souhaitables car elles doivent être coupées une fois le matelas 10 formé, ce qui engendre une perte de fibres de verre, et donc un coût de fabrication plus élevé. Par ailleurs, lorsque le support 3 se déplace, les excroissances 24 usent à la fois le support 3 et la partie mobile 26 par un effet d'abrasion. Ce qui vient d'être décrit pour la paroi 4b peut s'appliquer également pour la paroi 4a.

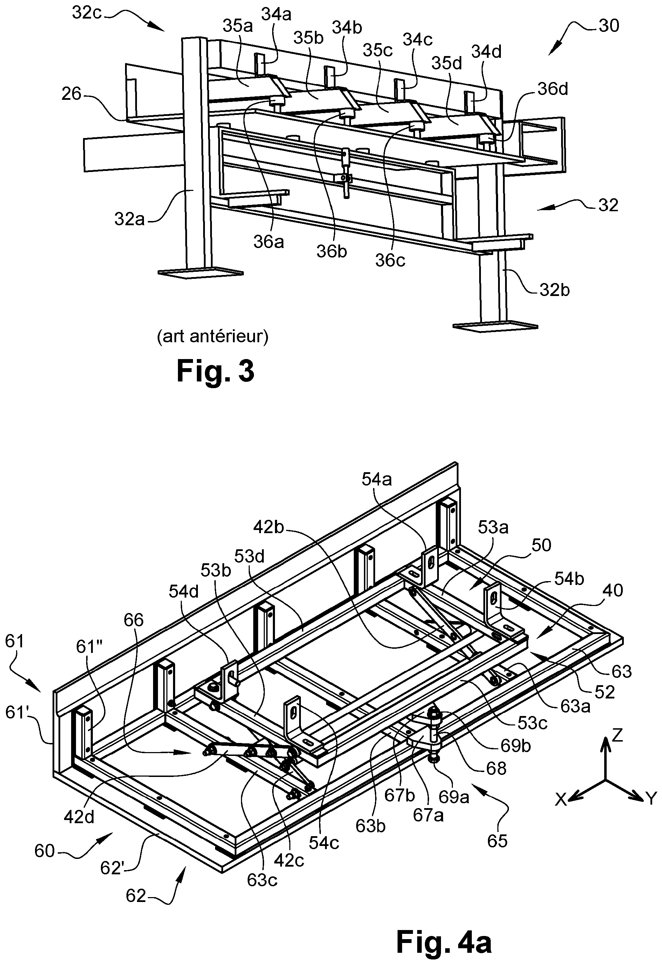

La figure 3 illustre un dispositif de réglage 30 disposé à l'intérieur de la paroi latérale 4b qui est, sur cette figure, dépourvue de sa cloison 5b. La paroi latérale 4b comprend une structure fixe 32 par laquelle elle est posée sur le sol. La structure fixe 32 comprend deux pieds 32a et 32b et une poutre longitudinale 32c. La partie mobile 26 est reliée à la poutre longitudinale 32c par des éléments de maintien 35a-d solidarisés à la poutre longitudinale 32c par des éléments de fixation 34a-d. La hauteur de la partie mobile 26 par rapport au support 3, et donc la distance « d », est ajustée grâce aux éléments de réglage 36a-c.

Cependant, le dispositif de réglage 30 présente l'inconvénient de ne pouvoir être réglé que lorsque la machine 1 est arrêtée puisqu'il est nécessaire de démonter partiellement la paroi latérale 4b pour accéder aux éléments de réglage 36a-d. Or, arrêter le fonctionnement de la machine 1 nécessite d'interrompre la production, ce qui engendre un coût et ne peut donc être fait qu'une ou deux fois par an. Par ailleurs, les réglages sont effectués à froid et ne sont donc pas optimisés. En effet, lorsque la machine est en fonctionnement, les différents éléments atteignent des valeurs très élevées de température, de l'ordre de 1600°C. Sous l'effet de la chaleur, ces éléments, en particulier ceux en contact avec les fibres de verre, se dilatent et les réglages effectués à froid peuvent ne plus être adaptés.

Un but de la présente invention est de pallier les inconvénients de l'art antérieur en proposant un dispositif de réglage accessible depuis l'extérieur de la paroi latérale et qui permet le réglage de la distance « d » sans interrompre le fonctionnement de la machine.

Selon un mode de réalisation, l'invention a pour objet une machine de fabrication de matelas en fibres minérales caractérisée en ce qu'elle comprend :
- un dispositif de convoyage apte à se déplacer horizontalement dans une première direction X,
- deux parois latérales écartées l'une de l'autre suivant une deuxième direction Y horizontale, situées respectivement le long des deux bords latéraux opposés du dispositif et qui définissent, avec une surface supérieure dudit dispositif, un espace dans lequel des fibres minérales sont introduites pour se déposer sur ladite surface supérieure, chaque paroi latérale s'étendant verticalement suivant une troisième direction Z, au moins une des deux parois latérales comprenant, à une extrémité inférieure, une partie mobile qui est apte à se déplacer verticalement et de manière étanche relativement à ladite paroi latérale et qui est disposée au moins en partie au-dessus d'une portion de la surface supérieure du dispositif de convoyage en regard, à une distance verticale « d » de ladite portion selon la troisième direction Z, ladite portion incluant le bord latéral correspondant du dispositif, et
- au moins un dispositif de réglage de la distance verticale « d » par ajustement de la position verticale de la partie mobile verticalement, ledit dispositif de réglage étant accessible depuis l'extérieur de ladite au moins une paroi latérale.

La machine de l'invention comprenant le dispositif de réglage accessible depuis l'extérieur de la paroi latérale a donc un fonctionnement optimisé puisque le réglage de la distance « d » peut être fait durant le fonctionnement de la machine. Ainsi, le réglage est effectué à chaud et donc, une fois que les différents matériaux des éléments de la machine se sont dilatés sous l'effet de la chaleur. Par ailleurs, il est possible de modifier le réglage de la distance d en fonction de différents paramètres, comme par exemple l'état d'usure de la machine.

Selon d'autres caractéristiques possibles prises seules ou en combinaison :
- ladite partie mobile peut dépasser au moins en partie du bord latéral correspondant du dispositif de convoyage suivant la deuxième direction Y ;
- ladite au moins une paroi latérale peut être mobile dans la deuxième direction horizontale ; une telle mobilité latérale peut permettre d'augmenter la distance entre les deux parois latérales et d'augmenter ainsi la largeur du tapis en fibres minérales formé sur la surface supérieure ; avantageusement, la distance « d » peut être réglée grâce au dispositif de réglage quelle que soit la position de la ou des paroi(s) latérale(s) dans la deuxième direction horizontale ;
- le dispositif de réglage peut comprendre un élément de réglage solidarisé à une partie fixe de la paroi latérale et à la partie mobile ; l'élément de réglage peut alors agir en exerçant une force sur la partie mobile selon la direction verticale ; la partie mobile peut ainsi se rapprocher ou s'écarter de la partie fixe de la paroi latérale entrainant respectivement une augmentation ou une diminution de la distance « d » ; avantageusement, le dispositif de réglage permet un réglage précis de la distance « d » ;
- l'élément de réglage peut comprendre une première patte solidarisée à la partie mobile de la paroi latérale, une deuxième patte fixée à la partie fixe et une tige de réglage reliant la première et la deuxième patte entre elles, et en ce que la première patte est apte à se déplacer le long de la tige ; la première et la deuxième patte peuvent par exemple comprendre chacune un orifice dans lequel est insérée la tige ; le déplacement de la première patte peut par exemple être réalisé par le vissage ou le dévissage d'une vis ou d'un écrou placé autour de la tige ;
- l'élément de réglage peut être positionné sous la partie mobile verticalement ; l'élément de réglage agit alors en exerçant une force sur la partie mobile selon la direction verticale ; la partie mobile peut ainsi se rapprocher ou s'écarter de la partie fixe de la paroi latérale entrainant respectivement une augmentation ou une diminution de la distance « d » ;
- le dispositif de réglage peut comprendre au moins un organe de contact apte à entrer en contact avec la partie mobile verticalement et à la supporter selon la direction verticale;
- le dispositif de réglage peut être apte à soulever ou à faire descendre la partie mobile verticalement ; l'organe de contact peut ainsi exercer une poussé vers le haut sur la partie mobile qui se rapproche alors de la partie fixe de la paroi latérale, entraînant ainsi une augmentation de la distance « d » ; l'organe de contact peut au contraire relâcher la pression exercée sur la partie mobile qui s'éloigne alors de la partie fixe de la paroi latérale, entraînant ainsi une diminution de la distance « d » , tout en étant supportée par l'organe de contact ; avantageusement, le dispositif de réglage permet un réglage précis de la distance « d » ;
- le dispositif de réglage peut comprendre des éléments de liaison mobile ; de tels élément peuvent être solidarisés à la partie mobile et à une partie fixe de la paroi latérale ; avantageusement, ces éléments permettent le déplacement de la partie mobile par rapport à la partie fixe de la paroi latérale, ces deux parties restant solidarisées ;
- le dispositif de réglage peut être apte à ajuster la position verticale de la partie mobile lorsque la machine est en fonctionnement ou à l'arrêt ; avantageusement, le réglage peut alors être fait de façon optimale lorsque les différents éléments de la machine, en particulier la partie mobile et le support, sont à leur taux de dilatation de fonctionnement ; le réglage peut aussi être fait au fil du temps en fonction de l'usure des différents éléments de la machine, en particulier la partie mobile et le support ; le réglage pouvant être fait durant le fonctionnement de la machine, il n'est pas nécessaire d'interrompre la production comme pour les machines de l'art antérieur ;
- le dispositif de réglage peut être apte à être mis en œuvre en fonction de conditions opératoires liées au fonctionnement de la machine ;
- Le dispositif de réglage peut être apte à être mis en œuvre en fonction de caractéristiques du tapis en fibres minérales ; ces caractéristiques peuvent être par exemple la largeur du tapis de fibres minérales, sa densité et/ou son épaisseur, en particulier la densité et/ou l'épaisseur dont la valeur a des conséquences sur la formation d'excroissances ;
- le dispositif de réglage peut être apte à être mis en œuvre à partir d'informations délivrées par un ou plusieurs capteurs ; l'information peut être par exemple des caractéristiques du tapis de fibres minérales (largeur, densité, épaisseur..), une pression exercée sur la partie mobile en raison, notamment d'un frottement avec le support ou de fibres minérales qui s'insèrent entre le support et la partie mobile, l'information peut aussi être la mesure de la distance « d » ou un ralentissement du déplacement du convoyeur en raison de frottements ; l'information peut également être donnée par des opérateurs (humains ou automatisés) qui vérifient la qualité du bord du tapis de fibres minérales, et notamment l'absence d'excroissance ;
- la machine peut comprendre plusieurs dispositifs de réglage espacés les uns des autres suivant la première direction X, le long de ladite au moins une paroi latérale ; avantageusement, des réglages différents peuvent être fait le long de la paroi latérale ;
- chacune des parois latérales peut comprendre une partie mobile verticalement, la machine comprenant au moins un dispositif de réglage de chacune des parties mobiles.

L'invention sera mieux comprise à la lecture de la description qui suit, faite en référence aux figures annexées dans lesquelles :
La figure 1 déjà décrite, est une vue en perspective d'une machine de fabrication de laine de verre de l'art antérieur ;
La figure 2 déjà décrite, est une vue en coupe transversale de la machine de la figure 1 ;
La figure 3 déjà décrite, est une vue en perspective de l'intérieur d'une paroi latérale des figures 1 et 2 ;
La figure 4a est une vue de dessus en perspective d'une partie d'un dispositif de réglage selon un premier mode de réalisation de l'invention ;
La figure 4b est une vue en coupe d'une partie d'une cloison comprenant le dispositif de réglage de la figure 4a ; et
La figure 5 est une vue en coupe d'une partie d'une cloison comprenant un dispositif de réglage selon un deuxième mode de réalisation de l'invention.

Pour des raisons de clarté, seuls les éléments essentiels pour la compréhension des modes de réalisation exposés ci-après ont été représentés de manière schématique, et ceci sans respect de l'échelle.

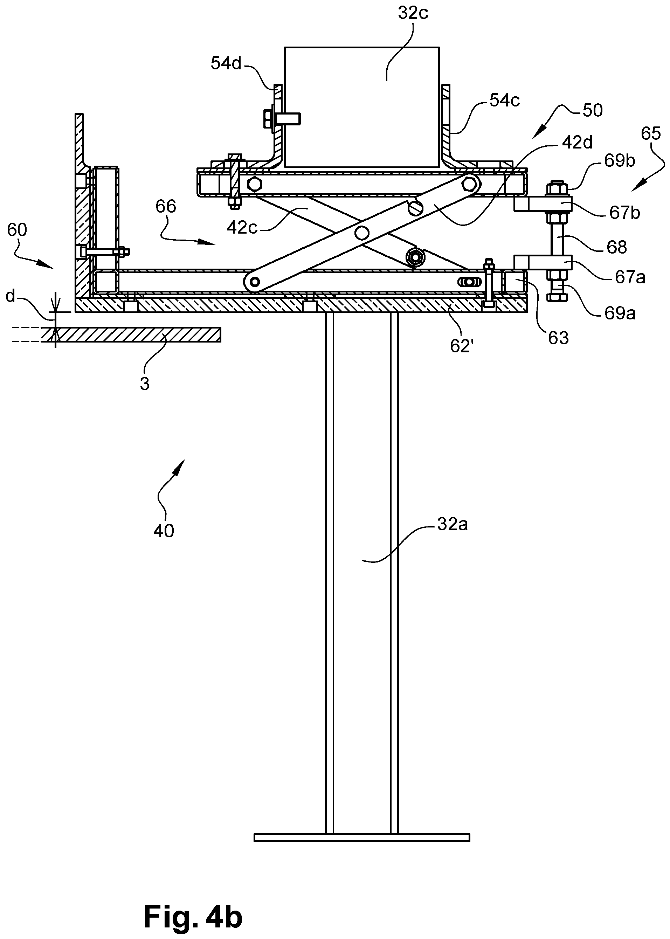

Les figures 4a et 4b illustrent de manière schématique un mode de réalisation d'un dispositif de réglage 40 de l'invention pouvant être placé dans la paroi latérale 4a de la machine 1. Le dispositif de réglage 40 est destiné à déplacer verticalement la partie mobile 60 par rapport à une partie fixe 50. Le dispositif de réglage 40 permet, par conséquent, de déplacer la partie mobile 60 par rapport à la surface supérieure du support 3 déplacé par le convoyeur 2' et donc, selon ce mode de réalisation, par rapport à la surface supérieure du dispositif de convoyage 2.

La partie fixe 50 comprend, dans ce mode de réalisation, un cadre 52 rectangulaire comprenant deux barreaux courts 53a et 53b et deux barreaux longs 53c et 53d, les barreaux longs 53c et 53d étant parallèles à la direction X de déplacement du support 3 de la machine 1. Le cadre 52 comprend 4 équerres 54a-d solidarisées aux barreaux courts 53a (équerres 54c et 54d) et 53b (équerres 54a et 54b) et définissant entre elles un espace dans lequel peut s'insérer, par exemple, la poutre longitudinale 32c. La partie fixe 50 peut ainsi être solidarisée à la poutre longitudinale 32c de la machine 1 grâce aux équerres 54a-d. Selon d'autres modes de réalisation, la partie fixe 50 peut être un cadre carré, une plaque ou tout type de structure pouvant être fixée à la poutre longitudinale 32c et au dispositif de réglage 40.

La partie mobile 60 est, dans ce mode de réalisation une pièce qui s'étend dans la direction X et qui possède une partie verticale 61 et une partie horizontale 62, la pièce ayant une section transversale en L. La partie verticale 61 comprend une plaque rectangulaire 61' qui est en contact avec la cloison 5a, ce qui permet notamment d'assurer l'étanchéité entre la partie mobile 60 et la cloison 5a. Cette étanchéité permet ainsi d'éviter que des fibres de verre ne passent à l'intérieur de la cloison 5a. La partie horizontale 62 comprend une plaque horizontale 62' sur laquelle est fixé un cadre rectangulaire 63 qui comprend trois barreaux internes 63a-c. Des barreaux 61" fixés à la fois au cadre rectangulaire 63 et à la plaque verticale 61' maintiennent cette dernière dans une position perpendiculaire à la plaque horizontale 62'. La partie mobile 60 et, en particulier, les plaques verticale 61' et horizontale 62', peuvent être constituées de tout type de matériau apte à résister à des températures supérieures à 1000°C et possédant un coefficient de friction bas, comme par exemple du téflon.

Le dispositif de réglage 40 comprend des éléments de liaison mobile 66 permettant de relier entre elles la partie mobile 60 à la partie fixe 50 de façon à ce que l'écart entre la partie mobile 60 et la partie fixe 50 soit modulable. Le dispositif de réglage comprend également un élément de réglage permettant d'ajuster la distance « d » en modifiant l'écart entre la partie mobile 60 et la partie fixe 50 dans la direction Z.

Dans ce mode de réalisation, les éléments de liaison mobile 66 comprennent quatre bielles 42a-d reliées à la partie mobile 60 par l'intermédiaire des barreaux internes 63a et 63c et à la partie fixe 50 par l'intermédiaire des barreaux courts 53a et 53b. Une première bielle 42d est fixée, d'une part, à une première face du barreau interne 63c et, d'autre part, à une première face du barreau court 53b. Une deuxième bielle 42c est fixée à une deuxième face du barreau interne 63c et à une deuxième face du barreau court 53b. Une troisième bielle 42b et une quatrième bielle 42a (non visible sur la figure 4) sont fixées de la même façon au barreau interne 63a et au barreau court 53a. Les bielles 42a-d peuvent être fixées aux barreaux 63a, 63c, 53a et 53b par tout type de système de fixation, comme par exemple un pivot, permettant l'articulation des bielles 42a-d par rapport aux barreaux internes 63a et 63c et aux barreaux courts 53a et 53b. Selon d'autres variantes de réalisation possibles, les éléments de liaison mobile 66 peuvent comprendre seulement 2 bielles, l'une fixée aux barreaux 63c et 53b et l'autre fixée aux barreaux 63a et 53a. Selon d'autres modes de réalisation possibles, les éléments de liaison mobile 66 peuvent être tout type d'élément, comme par exemple un ressort, permettant de relier la partie mobile 60 à la partie fixe 50 de manière à pouvoir modifier l'écart entre la partie mobile 60 et la partie fixe 50 dans la direction Z.

Le dispositif de réglage 40 comprend également un élément de réglage 65 qui comprend, dans ce mode de réalisation, une première patte de fixation 67a et une deuxième patte de fixation 67b, les deux pattes étant parallèles entre elles, ainsi qu'un actionneur qui est, dans ce mode de réalisation, une tige de réglage 68 placée dans une direction perpendiculaire aux pattes de fixation 67a et 67b. La première patte de fixation 67a est fixée sur la face supérieure du cadre 63 de la partie mobile 60 et la deuxième patte de fixation 67b est fixée à la face inférieure du barreau long 53c. Les pattes de fixation 67a et 67b sont chacune munies d'un orifice permettant le passage de la tige de réglage 68. La longueur de la tige de réglage 68 entre les deux pattes de fixation 67a et 67b est modulable grâce à des organes de vissage 69a et 69b qui sont ici des écrous. L'écrou 69a est accessible depuis l'extérieur de la paroi latérale et permet d'ajuster la distance entre la partie mobile 60 et la partie fixe 50, et donc la distance « d », lorsque la machine 1 est en fonctionnement.

En se référant à la figure 4b, le réglage de la distance « d » se fait grâce à l'écrou 69a accessible depuis l'extérieur de la paroi latérale. En vissant l'écrou 69a, la longueur de la tige de réglage 68 entre les pattes de fixation 67a et 67b est raccourcie, ce qui entraîne un déplacement vertical (selon la direction Z) de la partie mobile 60. La partie mobile 60 se rapproche alors de la partie fixe 50 ce qui entraîne un allongement de la distance « d ». A l'inverse, en dévissant l'écrou 69a, la longueur de la tige de réglage 68 entre les pattes de fixation 67a et 67b est allongée, ce qui entraîne un déplacement vertical de la partie mobile 60. La partie mobile 60 s'éloigne alors de la partie fixe 50 ce qui entraîne une diminution de la distance « d ». Les bielles 42a-d permettent à la partie mobile 60 de se déplacer par rapport à la partie fixe 50 tout en restant reliée à cette dernière.

Selon d'autres variantes de réalisation possibles, l'élément de réglage 65 peut être tout type d'actionneur solidarisé directement ou indirectement à la partie mobile 60 et à la partie fixe 50, comme par exemple un excentrique rotatif ou encore un vérin pneumatique, hydraulique ou électrique.

Dans l'exemple de réalisation décrit, le réglage est réalisé manuellement grâce à l'actionneur, cependant le réglage peut également être réalisé par un actionneur motorisé.

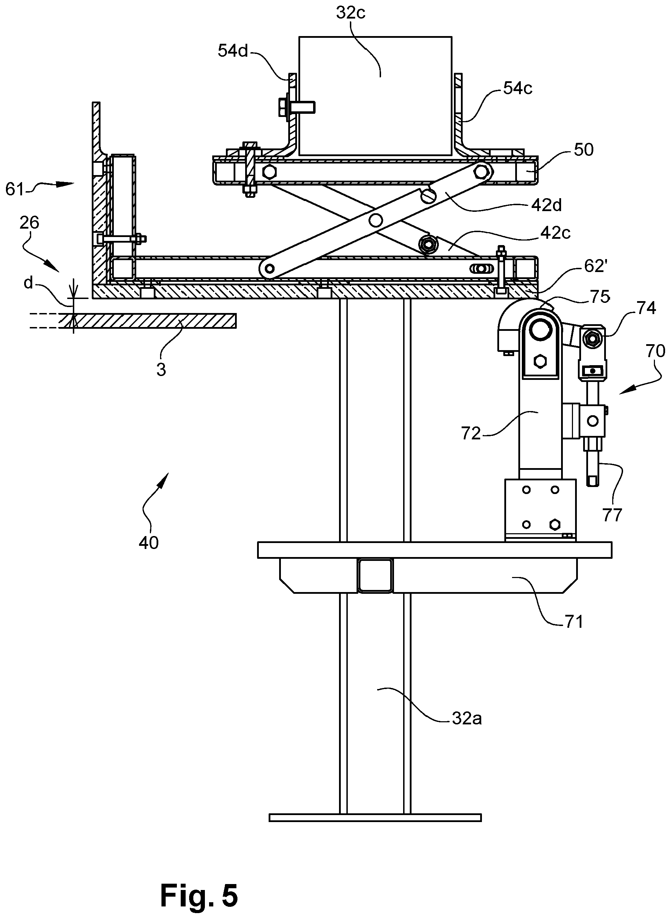

La figure 5 illustre un deuxième mode de réalisation de l'invention dans lequel l'élément de réglage est un dispositif de levage 70. Le dispositif de levage 70 est placé sous la partie mobile 60, et en particulier sous la plaque horizontale 62' et sur un support 71 fixé aux pieds 32a. Dans ce deuxième mode de réalisation, les éléments de liaison mobile 66 sont les bielles 42a-d mais, selon d'autres variantes de réalisation possibles, ils peuvent être tout type d'élément permettant de relier la partie mobile 60 à la partie fixe 50 de manière à pouvoir modifier l'écart entre la partie mobile 60 et la partie fixe 50 dans la direction Z.

Dans ce mode de réalisation, le dispositif de levage 70 comprend une tige de support 72 reliée de manière articulée à une bielle de levage 74 comprenant un organe de contact 75 qui est au contact de la plaque horizontale 62' et qui supporte cette dernière dans une direction verticale. Une tige de levage 77, reliée de manière articulée à la bielle 74, permet de modifier la hauteur de la partie mobile 60 et donc de moduler la distance « d ». Dans le cas où la tige de levage 77 est tirée vers le bas, l'organe de contact 75 monte et soulève la partie mobile 60 qui se rapproche de la partie fixe 50, augmentant ainsi la distance « d ». Au contraire, si la tige de levage 77 est poussée vers le haut, l'organe de contact 75 descend, entraînant ainsi un abaissement de la partie mobile 60 qui s'éloigne de la partie fixe 50, diminuant ainsi la distance « d ». Dans ce mode de réalisation, l'organe de contact 75 est une tête arrondie mais cet organe peut prendre tout type de forme.

Selon d'autre variantes possibles de ce mode de réalisation, le dispositif de levage 70 peut être, par exemple, un vérin ou tout type de dispositif pouvant être placé entre la partie mobile 60 et le support 71 et permettant de modifier la hauteur de la partie mobile 60.

Dans ce mode de réalisation, le réglage est effectué manuellement, cependant, selon d'autres variantes de réalisation possibles, le réglage peut être réalisé grâce à un système motorisé.

Selon un mode de réalisation de l'invention, le dispositif de réglage peut ne pas comprendre d'élément de mobilité. Selon ce mode de réalisation le dispositif de réglage peut, par exemple, comprendre uniquement l'élément de réglage 65 ou le dispositif de levage 70.

## Revendications

1. Machine (1) de fabrication de matelas en fibres minérales (19) **caractérisée en ce qu'**elle comprend :
- un dispositif de convoyage (2) apte à se déplacer horizontalement dans une première direction X,
- deux parois latérales (4a, 4b) écartées l'une de l'autre suivant une deuxième direction Y horizontale, situées respectivement le long des deux bords latéraux opposés (2a, 2b) du dispositif et qui définissent, avec une surface supérieure dudit dispositif (2), un espace dans lequel des fibres minérales sont introduites pour se déposer sur ladite surface supérieure, chaque paroi latérale (4a, 4b) s'étendant verticalement suivant une troisième direction Z, au moins une des deux parois latérales (4a, 4b) comprenant, à une extrémité inférieure, une partie mobile (60) qui est apte à se déplacer verticalement et de manière étanche relativement à ladite paroi latérale (4a, 4b) et qui est disposée au moins en partie au-dessus d'une portion de la surface supérieure du dispositif de convoyage en regard, à une distance verticale « d » de ladite portion selon la troisième direction Z, ladite portion incluant le bord latéral (2a, 2b) correspondant du dispositif (2),
- au moins un dispositif de réglage (40) de la distance verticale « d » par ajustement de la position verticale de la partie mobile (60) verticalement, ledit dispositif de réglage (40) étant accessible depuis l'extérieur à ladite au moins une paroi latérale (4a, 4b).

2. Machine selon la revendication 1, **caractérisée en ce que** ladite partie mobile (26, 60) dépasse au moins en partie du bord latéral (2a, 2b) correspondant du dispositif de convoyage (2) suivant la deuxième direction Y.

3. Machine selon la revendication 1 ou 2, **caractérisée en ce que** ladite au moins une paroi latérale (4a, 4b) peut être mobile dans la deuxième direction horizontale.

4. Machine selon l'une quelconque des revendications précédentes, **caractérisée en ce que** le dispositif de réglage (40) comprend un élément de réglage (65) relié à une partie fixe (50) de la paroi latérale (4a, 4b) et à la partie mobile (26, 60).

5. Machine selon la revendication 4, **caractérisée en ce que** l'élément de réglage (65) comprend une première patte (67b) solidarisée à la partie fixe (50) de la paroi latérale, une deuxième patte (67a) fixée à la partie mobile (26, 60) et une tige de réglage (68) reliant la première et la deuxième patte entre elles, et **en ce que** la deuxième patte (67a) est apte à se déplacer le long de la tige (68).

6. Machine selon l'une quelconque des revendications 4 ou 5, **caractérisée en ce que** l'élément de réglage (70) est positionné sous la partie mobile (26, 60) verticalement.

7. Machine selon la revendication 6, **caractérisée en ce que** l'élément de réglage (70) comprend au moins un organe de contact (75) apte à entrer en contact avec la partie mobile (26, 60) verticalement et à la supporter selon la direction verticale.

8. Machine selon l'une quelconque des revendications 4 à 7, **caractérisée en ce que** le dispositif de réglage (40) est apte à soulever ou à faire descendre la partie mobile (26, 60) verticalement.

9. Machine selon l'une quelconque des revendications précédentes, **caractérisé en ce que** le dispositif de réglage (40) comprend des éléments de liaison mobile (66).

10. Machine selon l'une quelconque des revendications précédentes, **caractérisée en ce que** le dispositif de réglage (40) est apte à ajuster la position verticale de la partie mobile (26, 60) lorsque la machine (1) est en fonctionnement ou à l'arrêt.

11. Machine selon l'une quelconque des revendications précédentes, **caractérisée en ce que** le dispositif de réglage (40) est apte à être mis en oeuvre en fonction de conditions opératoires liées au fonctionnement de la machine (1).

12. Machine selon l'une quelconque des revendications précédentes, **caractérisée en ce que** le dispositif de réglage (40) est apte à être mis en œuvre en fonction de caractéristiques du tapis de fibres minérales (19).

13. Machine selon l'une quelconque des revendications précédentes, **caractérisée en ce que** le dispositif de réglage (40) est apte à être mis en œuvre à partir d'informations délivrées par un ou plusieurs capteurs.

14. Machine selon l'une quelconque des revendications précédentes, **caractérisée en ce qu'**elle comprend plusieurs dispositifs de réglage (40) espacés les uns des autres suivant la première direction X, le long de ladite au moins une paroi latérale (4a, 4b).

15. Machine selon l'une quelconque des revendications précédentes, **caractérisée en ce que** chacune des parois latérales (4a, 4b) comprend la partie mobile (26, 60) verticalement, la machine (1) comprenant au moins un dispositif de réglage (65, 70) de chacune des parties mobiles (26, 60).
